# EUROPÄISCHE PATENTSCHRIFT

(11) **EP 0 499 297 B1**
(45) Veröffentlichungstag und Bekanntmachung des Hinweises auf die Patenterteilung: **20.04.1994**
(21) Anmeldenummer: 92108280.6
(22) Anmeldetag: 31.01.1989
(51) Int. Cl.: G01M 1/16, G01M 1/02, G01M 1/22

(54) **Verfahren und Vorrichtung zum Auswuchten eines Kraftfahrzeugrades oder dergleichen**
Method and device for balancing a vehicle wheel or the like
Procédé et dispositif pour équilibrer une roue de véhicule ou semblable

(30) Priorität: 04.02.1988 DE 3803325
(43) Veröffentlichungstag der Anmeldung: 19.08.1992
(62) Teilanmeldung aus: 89101642.0
(73) Patentinhaber: Beissbarth GmbH, 80993 München (DE)
(72) Erfinder: Staudinger, Alfons, W-8000 München 50 (DE); Bux, Hermann, W-8134 Pöcking/Possenhofen (DE)
(74) Vertreter: Herrmann-Trentepohl, Werner, Dipl.-Ing.

(56) Entgegenhaltungen:
- EP-A- 0 032 413
- DE-A- 3 002 121
- US-E- 31 971
- PATENT ABSTRACTS OF JAPAN vol. 12, no. 300 (P-745)(3147) 16. August 1988 & JP-A-63 173 129

## Beschreibung

Die Erfindung betrifft ein Verfahren zum Auswuchten eines Kraftfahrzeugrades oder dergleichen mit einer Wuchtmaschine, die eine Welle, auf der das darauf montierte Rad drehend antreibbar ist, mit der Welle gekoppelte, elektrische Geber, die bei Einwirkung von Kräften auf das Rad Geberausgangssignale abgeben, und einen Rechner aufweist, der aus den Geberausgangssignalen in Verbindung mit radspezifischen Daten die Unwuchtdaten ermittelt und ausgibt, sowie eine Vorrichtung zum Durchführen des Verfahrens.

Aus der DE-OS 3629059 sind ein Verfahren und eine Vorrichtung der obengenannten Art bekannt. Um die radspezifischen Daten zu ermitteln, werden an der Radfelge zwei in einem Winkelabstand voneinander entfernt liegende Vergleichsgewichte angebracht, und die Kräfte, die bei der Drehung des Rades auf die Geber ausgeübt werden, werden gemessen. Anschließend werden die Vergleichsgewichte entfernt und es erfolgt eine erneute Messung der Kräfte. Die beiden Meßergebnisse werden miteinander verrechnet, um die Unwuchtdaten zu ermitteln.

Demgegenüber liegt der Erfindung die Aufgabe zugrunde, die Genauigkeit der Unwuchtmessung zu verbessern.

Dazu ist das eingangs genannte Verfahren dadurch gekennzeichnet, daß die Geberausgangssignale bei angetriebenem Rad in ein Unwuchtfrequenzspektrum umgesetzt werden und daß die Unwuchtdaten aus dem Unwuchtfrequenzspektrum ermittelt werden.

Eine vorteilhafte Ausgestaltung des erfindungsgemäßen Verfahrens besteht darin, daß die Signale entsprechend der Drehzahl des Rades erzeugt und in ein Frequenzsignal umgesetzt werden, daß aus dem Unwuchtfrequenzspektrum die Spektrallinie mit der Frequenz entsprechend der Drehzahl des Rades ausgewählt und in ein Zeitspektrum oder in eine andere mathematische Darstellung einer Sinusfunktion zurücktransformiert wird und daß aus der Amplitude und der auf ein Nullpunkt-Bezugssignal bezogenen Phasenlage des zurücktransformierten Zeitspektrums die Unwuchtgröße und Unwuchtlage berechnet werden. Bei diesem Verfahren wird das Nutzsignal, nämlich die Spektrallinie, in dem Umwuchtfrequenzspektrum mit der Frequenz der Raddrehung auf einfache Weise ausgewählt und dann ausgewertet. Dabei werden alle Frequenzen außer der Nutzfrequenz in dem Unwuchtfrequenzspektrum unterdrückt, so daß sich eine hohe Meßgenauigkeit ergibt. Jegliche Filterstufen zum Ausfiltern des Nutzsignals aus den Geberausgangssignalen, die elektronisch nur mit großem Aufwand verwirklichen sind, können entfallen.

Die Erfindung betrifft ferner eine Vorrichtung zum Auswuchten eines Kraftfahrzeugrades oder dergleichen, nämlich eine Wuchtmaschine, die eine Welle, auf der das darauf montierte Rad drehend antreibbar ist, mit der Welle gekoppelte elektrische Geber, die bei Einwirkung von Kräften auf das Rad Geberausgangssignale abgeben, und einen Rechner aufweist, der aus den Geberausgangssignalen in Verbindung mit radspezifischen Daten die Unwuchtdaten ermittelt und ausgibt, wobei die Wuchtmaschine gekennzeichnet ist durch eine Transformations-Recheneinheit, die die bei angetriebenem Rad erzeugten Geberausgangssignale in ein Unwuchtfrequenzspektrum umsetzt, und durch Recheneinheiten, die die Unwuchtdaten aus dem Unwuchtfrequenzspektrum in Verbindung mit den radspezifischen Daten ermittelt.

Schließlich ist eine vorteilhafte Ausgestaltung der erfindungsgemäßen Wuchtmaschine gekennzeichnet durch eine Eingabeeinheit, um die Mustersignale und/oder die einem Mustersignal entsprechenden radspezifischen Daten in die Speicher einzugeben. In dieser Ausführungsform können die Mustersignale und/oder die radspezifischen Daten von Rädern, deren Daten herstellerseitig noch nicht erfaßt sind, direkt ermittelt beziehungsweise eingegeben werden.

Vorteilhafte Ausgestaltungen der Erfindung ergeben sich aus den restlichen Unteransprüchen im Zusammenhang mit der folgenden Beschreibung.

Ausführungsbeispiele der Erfindung werden nun anhand der beiliegenden Zeichnungen beschrieben. Es zeigen:
- Fig. 1: eine schematische Darstellung eines Rades auf einer Welle einer Wuchtmaschine;
- Fig. 2: ein Blockdiagramm der Meß/Auswertungseinrichtung einer Wuchtmaschine;
- Fig. 3: ein charakteristisches Frequenzspektrum für ein bestimmtes Rad;
- Fig. 4: ein charakteristisches Frequenzspektrum für ein anderes Rad;
- Fig. 5: eine graphische Darstellung von gemessenen Unwuchtsignalen und einem korrigierten Unwuchtnutzsignal.

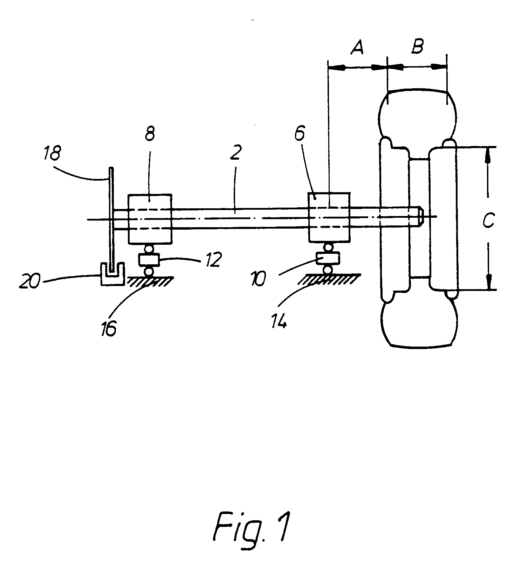

In der schematischen Darstellung von Fig. 1 ist eine Welle 2 gezeigt, auf der ein Rad 4 montiert ist, welches auf der Welle montiert und mit dieser drehend antreibbar ist. Die Welle 2 ist auf zwei Lagern 6, 8 gelagert, und die Lager sind über Kraftaufnehmer, sog. Geber 10, 12, auf Gegenlagern 14, 16 abgestützt und unter Abstand zueinander angeordnet. Der Geber 10 wird als innerer Geber und der Geber 12 als äußerer Geber bezeichnet, und diese Geber 10, 12 geben beim Einwirken von Kräften auf das Rad Ausgangssignale in Form eines Zeitspektrums ab. Auf der Welle 2 ist eine Loch- oder Schlitzscheibe 18 befestigt, die mit einer Lichtschranke 20 zusammenwirkt, um Signale zu erzeugen, die mit der Drehzahl der Welle 2 in definierter Beziehung stehen.

Um aus dem Geberausgangssignalen der Geber 10, 12 die Unwuchtdaten, nämlich die Größe der Unwucht und die Winkellage der Unwucht, berechnen zu können, werden die sog. radspezifischen Daten benötigt, die den Abstand A der inneren Radausgleichsebene zu einem Lagerfestpunkt des inneren Gebers 10, den Abstand B zwischen der inneren Radausgleichsebene und einer äußeren Radausgleichsebene sowie den Ausgleichsdurchmesser C des Rades umfassen, wie in Fig. 1 dargestellt ist.

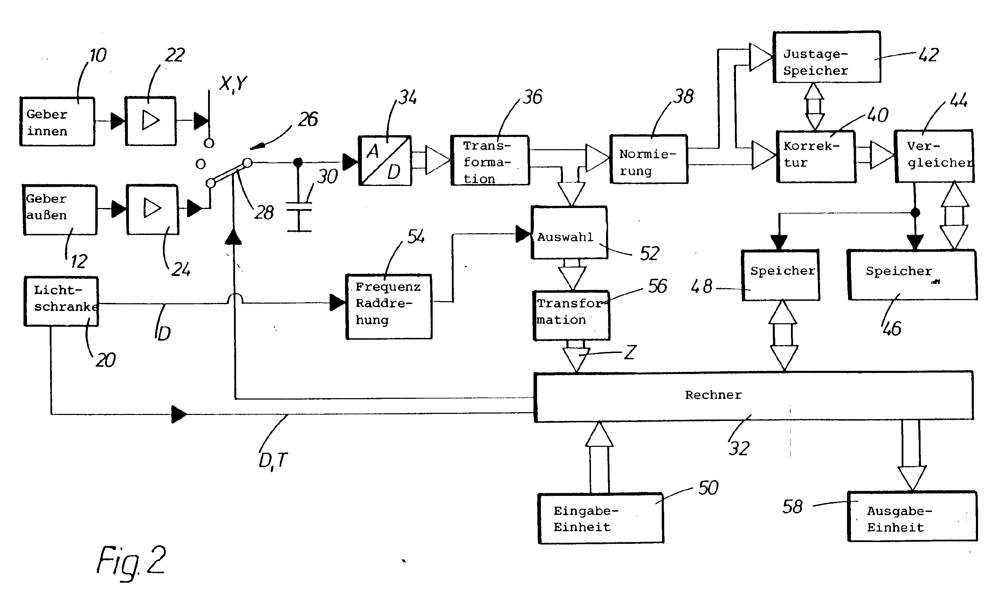

Die in Fig. 2 im Blockdiagramm dargestellte Meß- und Auswertungseinrichtung dient im wesentlichen dazu, die Geberausgangssignale zur Bestimmung der radspezifischen Daten und zur Ermittlung der Unwuchtdaten auszuwerten.

Zunächst wird die Bereitstellung der radspezifischen Daten beschrieben. Dazu wird das stillstehende Rad 4 in Eigenschwingungen versetzt, indem man dem Rad von Hand oder automatisch mit einem Stößel einen Schlag versetzt. Die Eigenschwingungen des Rades haben ein charakteristisches Frequenzspektrum, wie noch beschrieben wird. Die Geberausgangssignale entweder eines Gebers oder beider Geber 10, 12 werden in zugehörigen Verstärkern 22, 24 verstärkt und an einen Momentan-Wertspeicher 26 abgegeben, der durch einen elektronischen Schalter 28 und einen Kondensator 30 dargestellt ist. Der Schalter 28 erhält von einem Rechner 32 die Taktsignale für die Austastung der Meßwerte aus den Geberausgangssignalen. Bei der in Fig. 2 gezeigten Stellung des Schalters 28 wird das Ausgangssignal von dem Verstärker 24 auf den Kondensator 30 übernommen. Bevor der entsprechende Wert von dem Kondensator 30 in einem Analog/Digital-Wandler 34 übernommen wird, wird der Schalter 28 in die Position gebracht, in der die Verbindung zwischen dem Verstärke 24 u dem Kondensator 30 unterbrochen ist (Mittelstellung des Schalters 28).

Das von dem Rechner 32 an den Momentanwertspeicher 26 gegebene Tastsignal zum Austasten der Meßwerte wird dabei in Abhängigkeit von Taktsignalen T erzeugt, die von der Lichtschranke 20 abgegeben werden. Hierzu hat die Lochscheibe 18 beispielsweise 128 Ausnehmungen, so daß pro Radumdrehung 128 Taktimpulse erzeugt werden. Die Zahl von 128 Tastimpulsen pro Radumdrehung und die Meßdauer, beispielsweise 10 sec, bei einer Raddrehzahl von einer Umdrehung pro Sekunde führt zu einer ausreichenden Auflösung des Frequenzspektrums nach der Transformation in der Transformations-Recheneinheit 36.

Die digitalen Ausgangssignale des Analog/Digital-Wandlers werden an eine Transformations-Recheneinheit 36 übergeben, wo das digitalisierte Zeitspektrum der Geberausgangssignale in ein komplexes, für den Radtyp spezifisches Frequenzspektrum transformiert wird. Für diese Transformation stehen die Fourier-Transformation, die Laplace-Transformation, die sog. FFT-Transformation (Fast Fourier Transform), die sogen. DFT-Transformation (Discrete Fourier Transform) und dgl. zur Verfügung, die sich mit elektronischen Mitteln verwirklichen lassen.

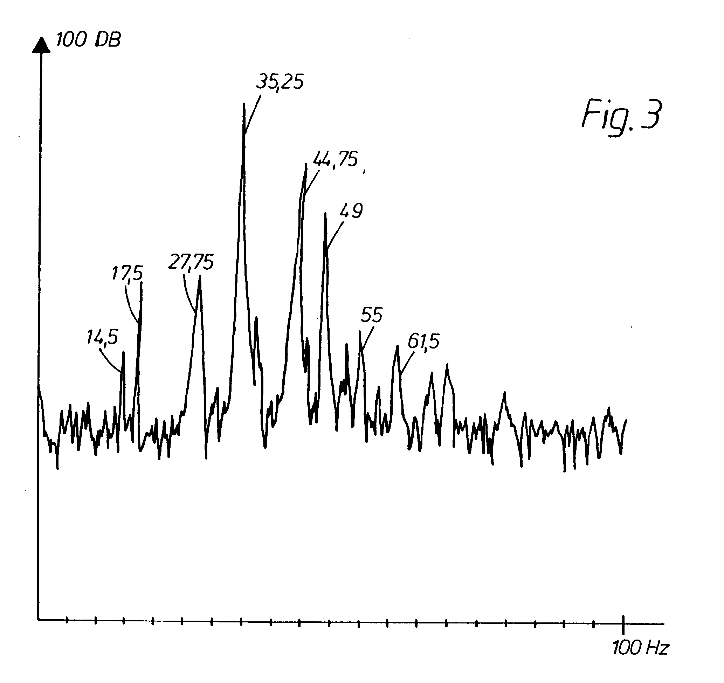

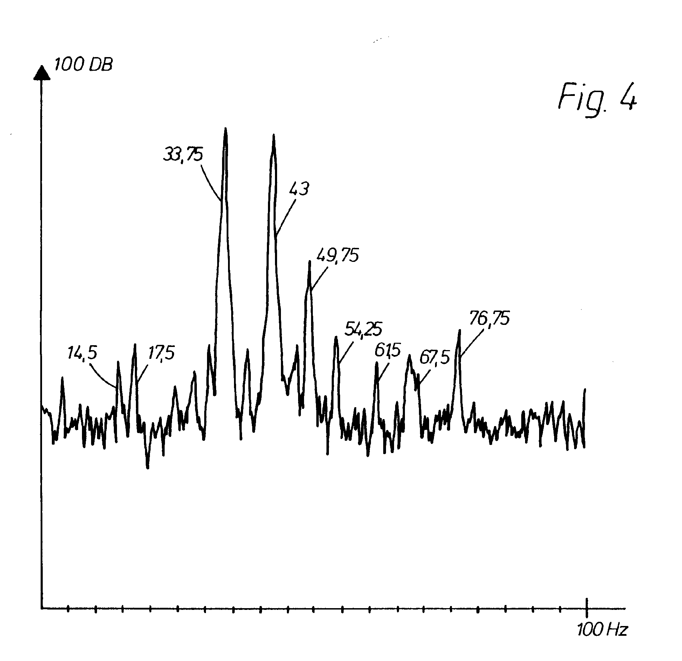

Zwei Beispiele für die Frequenzspektren, die als Folge von einem Schlag auf das stehende Rad von der Transformations-Recheneinheit abgegeben werden, sind in den Fig. 3 und 4 gezeigt. Fig. 3 zeigt das charakteristische Frequenzspektrum für ein Rad mit einer Felgenbreite von 3,5 Zoll und einem Felgendurchmesser von 10 Zoll. Fig. 4 zeigt das charakteristische Frequenzspektrum für ein Rad mit einer Felgenbreite von 4 Zoll und einem Felgendurchmesser von 12 Zoll. Aus den Fig. 3 und 4 ist ersichtlich, daß sich die jeweiligen Frequenzspektren der Eigenschwingungen des Rades in charakteristischer Weise unterscheiden. Diese Charakteristika werden im folgenden zur Bestimmung des Radtyps ausgewertet.

Die von der Transformations-Recheneinheit 36 abgegebenen Frequenzspektren gelangen zu einer Normierungs-Recheneinheit 38, in der diese Frequenzspektren normiert werden, um die Wirkung unterschiedlich starker Schläge auf das Rad auszugleichen. Die Normierung der Frequenzspektren kann dadurch erfolgen, daß der Mittelwert des gesamten Frequenzspektrums gebildet und das Frequenzspektrum dann in Abhängigkeit von der Abweichung des Mittelwertes von einem vorgegebenen Bezugsmittelwert angehoben oder abgesenkt wird. Eine andere Möglichkeit der Normierung besteht darin, daß in dem Frequenzspektrum die Amplitude der Spektrallinie mit der größten Amplitude auf einen vorgegebenen Wert gebracht wird, und daß die restlichen Spektrallinien entsprechend angehoben oder abgesenkt werden. Um das Frequenzspektrum besser weiterverarbeiten zu können, wird der Rauschpegel des Frequenzspektrums unterdrückt. Die Rauschpegelunterdrückung kann ebenfalls in der Normierungs-Recheneinheit 38 durchgeführt werden.

Das Frequenzspektrum am Ausgang der Normierungs-Recheneinheit 38 enthält außer den Spektrallinien, die für das jeweilige Rad charakteristisch sind, noch Spektrallinien, die für die betreffende Wuchtmaschine charakteristisch sind und auf deren Eigenschwingungen beruhen. Daher wird das Frequenzspektrum am Ausgang der Normierungs-Recheneinheit 38 in Bezug auf die wuchtmaschinenspezifischen Spektrallinien bereinigt. Hierzu werden die normierten Frequenzspektren an eine Korrektur-Recheneinheit 40 abgegeben, die mit einem Justage-Speicher 42 in Verbindung steht. Der Justage-Speicher 42 enthält das wuchtmaschinenspezifische, normierte Justage-Frequenzspektrum, und die Korrektur-Recheneinheit 40 korrigiert das von der Normierungs-Recheneinheit 38 abgegebene Frequenzspektrum um das in dem Justage-Speicher 42 enthaltene Justage-Frequenzspektrum. Am Ausgang der Korrektur-Recheneinheit 40 wird daher ein bereinigtes Frequenzspektrum abgegeben, welches nur noch die Spektrallinien enthält, die für das betreffende Rad charakteristisch sind.

Das Justage-Frequenzspektrum in dem Justage-Speicher 42 wird beispielsweise vor der ersten Unwuchtmessung einmal gemessen und abgespeichert und kann dann konstant gespeichert bleiben, bis Veränderungen an der Wuchtmaschine eine neue Justage erforderlich machen. Die Messung des Justage-Frequenzspektrums erfolgt in ähnlicher Weise, wie oben beschrieben wurde, wobei lediglich die Welle 2 der Wuchtmaschine beispielsweise durch einen Schlag in Eigenschwingung versetzt wird und die dabei entstehenden Geberausgangssignale über den Momentanwertspeicher 26, den Analog/Digital-Umsetzer 34, die Transformations-Recheneinheit 36 und die Normierungs- Recheneinheit 38 verarbeitet und dann in dem Justage-Speicher 42 abgespeichert werden.

Das Spektrum am Ausgang der Korrektur-Recheneinheit 40 wird an einen Vergleicher 44 abgegeben, der mit einem Speicher 46 in Verbindung steht, in dem Musterfrequenzspektren für verschiedene Radtypen abgespeichert sind. Wenn der Vergleicher 44 die Übereinstimmung zwischen dem von der Korrektur-Recheneinheit 40 abgegebenen Frequenzspektrum und einem in dem Speicher 46 abgespeicherten Musterfrequenzspektrum feststellt, wird diese Information an einen Speicher 48 abgegeben, in dem die radspezifischen Daten A, B und C in Korrelation mit den Musterfrequenzspektren in dem Speicher 46 abgespeichert sind. Der Speicher 48 gibt daraufhin die betreffenden radspezifischen Daten an den Rechner 32 ab, so daß sie dort zur Berechnung der Unwuchtgrößen zur Verfügung stehen.

Die Musterfrequenzspektren in dem Speicher 46 und/oder die radspezifischen Daten in dem Speicher 48 können entweder vom Hersteller direkt eingegeben oder über die Wuchtmaschine ermittelt und abgespeichert werden. Im letzteren Fall wird einfach ein Rad, dessen radspezifische Daten beispielsweise mit einer Schieblehre ermittelt worden sind, auf die Maschine montiert, dem Rad wird ein Schlag versetzt, und das entsprechende Spektrum wird, wie oben beschrieben, verarbeitet und im Speicher 46 abgespeichert. Die dazugehörigen radspezifischen Daten werden dann über eine Eingabeeinheit 50 in den Speicher 48 eingegeben. Dies gibt auch die Möglichkeit, Musterfrequenzspektren und radspezifische Daten von neuen Radtypen in die Speicher 46, 48 einzuspeichern.

Nachdem die radspezifischen Daten in dem Recher 32 bereitgestellt sind, können nunmehr die Unwuchtgrößen bestimmt werden. Hierzu wird das auf der Welle 2 montierte Rad 4 in Drehingen versetzt und die Geberausgangssignale der beiden Geber 10, 12 werden nach Verstärkung durch die Verstärker 22, 24 an den Momentanwertspeicher 26 gegeben, der wie oben beschrieben ein Austastsignal von dem Rechner 32 erhält.

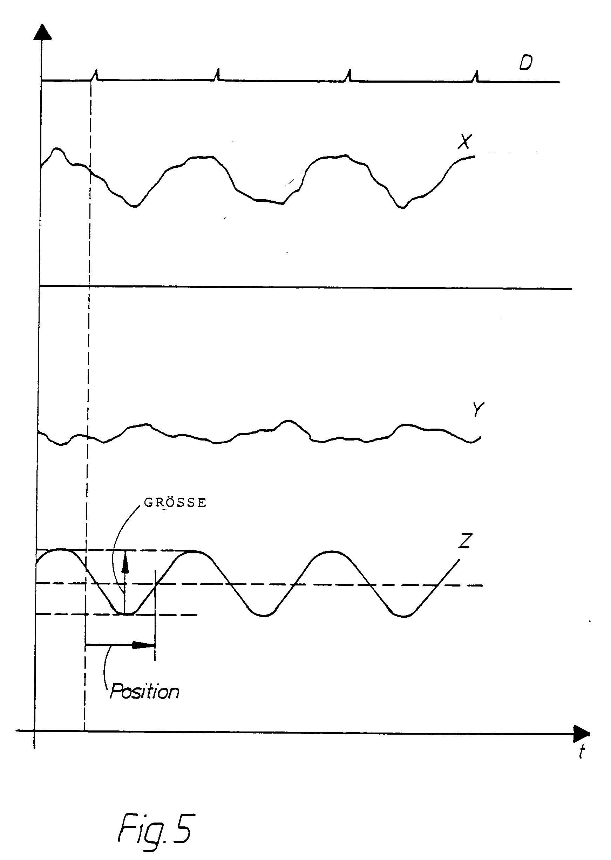

Nachdem die Signale den Analog/Digital-Wandler 34 und die Transformations-Recheneinheit 36 durchlaufen haben, steht das entsprechende Frequenzspektrum am Eingang der Auswahl- Recheneinheit 52 an, in der aus dem anstehenden Frequenzspektrum nur die Spektrallinie ausgewählt wird, die der Frequenz der Raddrehung entspricht. Die Auswahl-Recheneinheit 52 erhält dazu ein Signal von einem Frequenz-Umsetzer 54, der aus dem Ausgangssignal der Lichtschranke 20, das aus einem Impuls pro Radumdrehung (Impulszug D in Fig. 5) besteht, die entsprechende Frequenz ermittelt. Das Ausgangssignal der Auswahl-Recheneinheit 52, das aus der Spektrallinie mit der Frequenz der Raddrehung besteht, wird an eine Transformations-Recheneinheit 56 abgegeben, die diese Spektrallinie in ein Zeitspektrum zurücktransformiert und dieses Signal an den Rechner 32 abgibt. Die Transformations-Recheneinheit 56 ist wie die Transformations-Recheneinheit 36 mit umgekehrter Funktion aufgebaut.

Fig. 5 zeigt in der obersten Zeile den Impulszug, der von der Lichtschranke 20 abgegeben wird, der pro Radumdrehung einen Impuls aufweist und der auch an den Rechner 32 gegeben wird. In der zweiten Zeile ist das Zeitspektrum x eines Geberausgangssignals gezeigt, welches an dem Punkt X in Fig. 2 ansteht. Ein solches Zeitspektrum wird von einem Geber abgegeben, der ein gutes Nutzsignal/Störsignal-Verhältnis hat. Das Spektrum Y stellt das Zeitspektrum des Ausgangssignals eines Gebers dar, der ein schlechtes Nutzsignal/Störsignal-Verhältnis hat. Schließlich ist das Spektrum Z das Zeitspektrum des Signals, welches an der Stelle Z in Fig. 2 ansteht und das Nutzsignal ist, welches in dem Rechner 32 mit dem dort anstehenden radspezifischen Daten verrechnet wird. In dem Rechner 32 wird die Unwuchtgröße aus dem Spitzenabstand der Sinuswelle des Spektrums Z und die Unwuchtlage aus dem Abstand des Nulldurchgangs der Sinuswelle von dem zugehörigen Impuls des Impulszuges D der Lichtschranke 20 berechnet. Fig. 5 zeigt insbesondere, daß bei der oben beschriebenen Messung der Unwuchtgrößen ein Nutzsignal Z zur Verfügung steht, welches die Ableitung genauer Meßgrößen ermöglicht. Der Rechner 32 kann daher aus diesem Meßsignal und den radspezifischen Daten genaue Unwuchtdaten ermitteln und an einer Ausgabeeinheit 58 ausgeben.

## Patentansprüche

1. Verfahren zum Auswuchten eines Kraftfahrzeugrades oder dergleichen mit einer Wuchtmaschine, die eine Welle, auf der das darauf montierte Rad drehend antreibbar ist, mit der Welle gekoppelte, elektrische Geber, die bei Einwirkung von Kräften auf das Rad Geberausgangssignale abgeben, und einen Rechner aufweist, der aus den Geberausgangssignalen in Verbindung mit radspezifischen Daten die Unwuchtdaten ermittelt und ausgibt, dadurch gekennzeichnet, daß
- die Geberausgangssignale bei angetriebenem Rad in ein Unwuchtfrequenzspektrum umgesetzt werden, und daß
- die Unwuchtdaten aus dem Unwuchtfrequenzspektrum ermittelt werden.

2. Verfahren nach Anspruch 1, dadurch gekennzeichnet, daß die Geberausgangssignale digitalisiert werden, bevor sie in Frequenzspektren transformiert werden.

3. Verfahren nach Anspruch 1 oder 2, dadurch gekennzeichnet, daß
- Signale entsprechend der Drehzahl des Rades erzeugt und in ein Frequenzsignal umgesetzt werden, daß
- aus dem Unwuchtfrequenzspektrum die Spektrallinie mit der Frequenz entsprechend der Drehzahl des Rades ausgewählt und in ein Zeitspektrum zurücktransformiert wird, und daß
- aus der Amplitude und der auf ein Nullpunkt-Bezugssignal bezogenen Phasenlage des zurücktransformierten Zeitspektrums die Unwuchtgröße und die Unwuchtlage berechnet werden.

4. Wuchtmaschine, die eine Welle (2), auf der das darauf montierte Rad drehend antreibbar ist, mit der Welle gekoppelte elektrische Geber (10,12), die bei Einwirkung von Kräften auf das Rad Geberausgangssignale abgeben, und einen Rechner aufweist, der aus den Geberausgangssignalen in Verbindung mit radspezifischen Daten die Unwuchtdaten ermittelt und ausgibt, zur Durchführung des Verfahrens nach einem der Ansprüche 1 bis 3, gekennzeichnet durch eine Transformations-Recheneinheit (36), die die bei angetriebenem Rad erzeugten Geberausgangssignale in ein Unwuchtfrequenzspektrum umsetzt, und durch Recheneinheiten, die die Unwuchtdaten aus dem Unwuchtfrequenzspektrum in Verbindung mit den radspezifischen Daten ermitteln.

5. Wuchtmaschine nach Anspruch 4, gekennzeichnet durch einen Momentanwertspeicher (26) und einen nachgeschalteten Analog/Digital-Wandler (34), von dem die digitalisierten Signale an die Transformations-Recheneinheit (38) abgegeben werden.

6. Wuchtmaschine nach Anspruch 5, gekennzeichnet durch einen Frequenzwandler (54), der ein Eingangssignal entsprechend der Drehzahl des Rades empfängt und ein der Drehzahl des Rades entsprechendes Frequenzsignal abgibt, eine Auswahlrecheneinheit (52), die aus dem Unwuchtfrequenzspektrum die Spektrallinie der Radfrequenz auswählt, und durch eine zweite Transformations-Recheneinheit (56), die die Spektrallinie in ein Zeitspektrum oder in eine andere mathematische Darstellung einer Sinusfunktion zurücktransformiert und an den Rechner (32) abgibt.

7. Wuchtmaschine nach einem der Ansprüche 4 bis 6, gekennzeichnet durch eine Eingabeeinheit (50), um die Mustersignale und/oder die einem Mustersignal entsprechenden radspezifischen Daten in die Speicher (46,48) einzugeben.

## Claims

1. Process for balancing a motor vehicle wheel or the like with a balancing machine which comprises a shaft, on which the wheel mounted thereon can be rotatably driven, electrical transmitters which are coupled to the shaft and which emit transmitter output signals when forces act upon the wheel, and a computer which detects and emits the imbalance data from the transmitter output signals in conjunction with data specific to the wheel, characterised in that the transmitter output signals are converted into an imbalance frequency spectrum when the wheel is driven; and in that the imbalance data are determined from the imbalance frequency spectrum.

2. Process according to Claim 1, characterised in that the transmitter output signals are digitised before they are transformed into frequency spectra.

3. Process according to either of Claims 1 and 2, characterised in that signals corresponding to the rotational speed of the wheel are generated and converted into a frequency signal; in that the spectral line having the frequency corresponding to the rotational speed of the wheel is selected from the imbalance frequency spectrum and is converted back into a time spectrum; and in that the amount of imbalance and imbalance location are calculated from the amplitude and the phase position of the reconverted time spectrum relative to a zero point reference signal.

4. Balancing machine which comprises a shaft (2) on which the wheel mounted thereon can be rotatably driven, electrical transmitters (10, 12) which are coupled to the shaft and which emit transmitter output signals when forces act on the wheel, and a computer which detects and emits the imbalance data from the transmitter output signals in conjunction with data specific to the wheel, for performing the process according to any one of Claims 1 to 3, characterised by a transformation-computer unit (36) which converts the transmitter output signals generated when the wheel is driven into an imbalance frequency spectrum, and by computer units which determine the imbalance data from the imbalance frequency spectrum in conjunction with the wheel-specific data.

5. Balancing machine according to Claim 4, characterised by a transient value memory (26) and an analogue/digital convertor (34) connected downstream, of which the digitised signals are emitted to the transformation computer unit (36).

6. Balancing machine according to Claim 5, characterised by a frequency convertor (54), which receives an input signal according to the rotational speed of the wheel and delivers a frequency signal corresponding to the rotational speed of the wheel, a selection computer unit (52), which selects the spectral line of the wheel frequency from the imbalance frequency spectrum, and by a second transformation-computer unit (56), which converts the spectral line back into a time spectrum or into another mathematical representation of a sine function and delivers the latter to the computer (32).

7. Balancing machine according to any one of Claims 4 to 6, characterised by an input (50) for inputting the sample signals and/or the wheel-specific data corresponding to a sample signal into the memories (46, 48).

## Revendications

1. Procédé pour équilibrer une roue de véhicule automobile ou analogue avec une équilibreuse qui présente un arbre sur lequel la roue qui y est montée peut être entraînée en rotation, des capteurs électriques couplés à l'arbre qui délivrent des signaux de sortie lorsque des forces agissent sur la roue et un calculateur qui détermine et sort les données du déséquilibre à partir des signaux de sortie des capteurs associés à des données spécifiques à la roue, caractérisé en ce que
- les signaux de sortie des capteurs produits avec une roue entraînée sont convertis en un spectre de fréquences de déséquilibre et que
- les données du déséquilibre sont déterminées à partir du spectre de fréquences de déséquilibre.

2. Procédé selon la revendication 1, caractérisé en ce que les signaux de sortie des capteurs sont numérisés avant d'être transformés en spectres de fréquences.

3. Procédé selon la revendication 1 ou 2, caractérisé en ce que
- des signaux sont produits en correspondance avec la vitesse de rotation de la roue et sont convertis en un signal de fréquences, que
- la raie spectrale est choisie avec la fréquence dans le spectre de fréquences de déséquilibre en correspondance avec la vitesse de rotation de la roue et est retransformée en un spectre de temps, et que
- l'ampleur et la position du déséquilibre sont calculées à partir de l'amplitude et de la relation des phases, par rapport à un signal de référence au point zéro, du spectre de temps retransformé.

4. Equilibreuse qui présente un arbre (2) sur lequel la roue qui y est montée peut être entraînée en rotation, des capteurs électriques (10, 12) couplés à l'arbre qui délivrent des signaux de sortie lorsque des forces agissent sur la roue et un calculateur qui détermine et sort les données du déséquilibre à partir des signaux de sortie des capteurs associés à des données spécifiques à la roue, pour la réalisation du procédé selon l'une des revendications 1 à 3, caractérisée par une unité de calcul de transformation (36) qui convertit les signaux de sortie des capteurs produits avec une roue entraînée en un spectre de fréquences de déséquilibre et par des unités de calcul qui déterminent les données du déséquilibre à partir du spectre de fréquences de déséquilibre en liaison avec les données spécifiques à la roue.

5. Equilibreuse selon la revendication 4, caractérisée par une mémoire de valeur instantanée (26) et un convertisseur analogique/numérique (34) monté en aval qui délivre les signaux numérisés à l'unité de calcul de transformation (36).

6. Equilibreuse selon la revendication 5, caractérisée par un convertisseur de fréquences (54) qui reçoit un signal en correspondance avec la vitesse de rotation de la roue et délivre un signal de fréquence correspondant à la vitesse de rotation de la roue, une unité de calcul de sélection (52) qui choisit la raie spectrale de la fréquence de la roue dans le spectre de fréquences de déséquilibre et par une deuxième unité de calcul de transformation (56) qui retransforme la raie spectrale en un spectre de temps ou en une autre représentation mathématique d'une fonction sinusoïdale et le/la transmet au calculateur (32).

7. Equilibreuse selon l'une des revendications 4 à 6, caractérisée par une unité d'entrée (50) destinée à entrer dans les mémoires (46, 48) les signaux modèles et/ou les données spécifiques à la roue correspondant à un signal modèle.
